# EUROPÄISCHE PATENTANMELDUNG

(11) **EP 4 083 481 A1**
(43) Veröffentlichungstag der Anmeldung: **02.11.2022**
(21) Anmeldenummer: 22167089.6
(22) Anmeldetag: 07.04.2022
(51) Int. Cl.: F16K 11/085, F16K 27/06

(54) **VENTIL FÜR EIN FLÜSSIGKEITSSYSTEM UND FLÜSSIGKEITSSYSTEM FÜR EIN FAHRZEUG**

(30) Priorität: 28.04.2021 DE 102021110942
(71) Anmelder: HELLA GMBH & CO. KGAA, 59552 Lippstadt (DE)
(72) Erfinder: BEWERMEYER, Frank, 33142 Büren (DE); Feldkamp, Horst, 59557 Lippstadt (DE); GROTHE, Benjamin, 59739 Wickede (DE); NIESS, Dominik, 59555 Lippstadt (DE); TIEMEYER, Sebastian, 44143 Dortmund (DE)
(74) Vertreter: Bringemeier, Ulrich Heinz

(57) **Zusammenfassung**

Die vorliegende Erfindung betrifft ein Ventil (6) für ein Flüssigkeitssystem (2) eines Fahrzeugs, umfassend ein Ventilgehäuse (8) mit einer Mehrzahl von Ventilgehäuseöffnungen (A, B, C, D, E, F, G, H, I), einen in dem Ventilgehäuse (8) um eine Drehachse (10) drehbar angeordneten Ventilkörper mit mindestens einem strömungsleitenden Verbindungskanal zur strömungsleitenden Verbindung von mindestens zwei Ventilgehäuseöffnungen der Mehrzahl von Ventilgehäuseöffnungen (A, B, C, D, E, F, G, H, I), eine zwischen dem Ventilgehäuse (8) und dem Ventilkörper angeordnete Ventildichtung mit zu den Ventilgehäuseöffnungen (A, B, C, D, E, F, G, H, I) korrespondierenden Ventildichtungsöffnungen, einen Ventilantrieb zur automatischen Drehung des Ventilkörpers um die Drehachse (10) und eine zu den Ventilgehäuseöffnungen (A, B, C, D, E, F, G, H, I) korrespondierende Mehrzahl von Anschlussstutzen (12) zur strömungsleitenden Verbindung des Ventils (6) mit einem Rest des Flüssigkeitssystems (2),
dadurch gekennzeichnet,
dass mindestens einer der Anschlussstutzen (12) derart ausgebildet und angeordnet ist, dass wahlweise ein Schlauch oder eine Pumpe (14) des Flüssigkeitssystems (2) mittels dieses Anschlussstutzens (12) an dem Ventil (6) direkt strömungsleitend anschließbar ist.

Ferner betrifft die Erfindung ein Flüssigkeitssystem (2) eines Fahrzeugs.

## Beschreibung

Die vorliegende Erfindung bezieht sich auf ein Ventil für ein Flüssigkeitssystem der im Oberbegriff des Anspruchs 1 genannten Art und ein Flüssigkeitssystem eines Fahrzeugs.

Derartige Ventile für Flüssigkeitssysteme sowie Flüssigkeitssysteme für Fahrzeuge sind aus dem Stand der Technik in zahlreichen Ausführungsvarianten bereits bekannt. Die bekannten Ventile für Flüssigkeitssysteme von Fahrzeugen umfassen dabei ein Ventilgehäuse mit einer Mehrzahl von Ventilgehäuseöffnungen, einen in dem Ventilgehäuse um eine Drehachse drehbar angeordneten Ventilkörper mit mindestens einem strömungsleitenden Verbindungskanal zur strömungsleitenden Verbindung von mindestens zwei Ventilgehäuseöffnungen der Mehrzahl von Ventilgehäuseöffnungen, eine zwischen dem Ventilgehäuse und dem Ventilkörper angeordnete Ventildichtung mit zu den Ventilgehäuseöffnungen korrespondierenden Ventildichtungsöffnungen, einen Ventilantrieb zur automatischen Drehung des Ventilkörpers um die Drehachse und eine zu den Ventilgehäuseöffnungen korrespondierende Mehrzahl von Anschlussstutzen zur strömungsleitenden Verbindung des Ventils mit einem Rest des Flüssigkeitssystems. Die aus dem Stand der Technik bekannten diesbezüglichen Anschlussstutzen weisen üblicherweise im Querschnitt eine kreisrunde Innenkontur und eine kreisrunde Außenkontur auf.

Hier setzt die vorliegende Erfindung an.

Der vorliegenden Erfindung liegt die Aufgabe zugrunde, ein Ventil für ein Flüssigkeitssystem und ein Flüssigkeitssystem eines Fahrzeugs zu verbessern.

Diese Aufgabe wird durch ein Ventil für ein Flüssigkeitssystem eines Fahrzeugs mit den Merkmalen des Anspruchs 1 gelöst, das dadurch gekennzeichnet ist, dass mindestens einer der Anschlussstutzen derart ausgebildet und angeordnet ist, dass wahlweise ein Schlauch oder eine Pumpe des Flüssigkeitssystems mittels dieses Anschlussstutzens an dem Ventil direkt strömungsleitend anschließbar ist. Ferner wird dieses Problem durch ein Flüssigkeitssystem eines Fahrzeugs nach Anspruch 8 gelöst. Bei dem Fahrzeug kann es sich beispielsweise um ein als Kraftfahrzeug ausgebildetes Landfahrzeug handeln. Rein exemplarisch seien hier lediglich als ein Elektrofahrzeug oder als ein sogenanntes Hybridfahrzeug ausgebildete Kraftfahrzeuge genannt. Jedoch ist die Erfindung auch bei anderen Landfahrzeugen sowie bei Luft- und Seefahrzeugen vorteilhaft einsetzbar. Bei dem erfindungsgemäßen Ventil kann es sich bevorzugt um ein sogenanntes Mehrwegeventil handeln. Dies ist jedoch nicht zwingend der Fall. Die Unteransprüche betreffen vorteilhafte Weiterbildungen der Erfindung.

Ein wesentlicher Vorteil der Erfindung liegt insbesondere darin, dass ein Ventil für ein Flüssigkeitssystem und ein Flüssigkeitssystem eines Fahrzeugs verbessert sind.

Aufgrund der erfindungsgemäßen Ausbildung des Ventils für ein Flüssigkeitssystem eines Fahrzeugs und des Flüssigkeitssystems eines Fahrzeugs sind das vorgenannte Ventil und das vorgenannte Flüssigkeitssystem zum einen auf konstruktiv und fertigungstechnisch besonders einfache Art und Weise realisierbar. Die Erfindung ermöglicht es, dass auch komplexere Flüssigkeitssysteme mit beispielsweise komplexeren Ventilen, wie Mehrwegeventile, und mit an diesen Ventilen strömungsleitend angeschlossenen weiteren Komponenten dieser Flüssigkeitssysteme im Vergleich zum Stand der Technik relativ einfach verwirklichbar sind. Beispielsweise ist mittels der Erfindung eine weitgehende Zentralisierung der Baugruppen von Flüssigkeitssystemen, wie beispielsweise Flüssigkeitstanks, Pumpen und den vorgenannten Ventilen, ermöglicht. Hierdurch können zum Beispiel Gehäuseteile für eine Mehrzahl von Baugruppen eines Flüssigkeitssystems, beispielsweise den vorgenannten Baugruppen, gleichzeitig verwendet werden. Es ist erfindungsgemäß nicht mehr erforderlich, dass die einzelnen Baugruppen eines Flüssigkeitssystems, wie beim Stand der Technik üblich, miteinander durch zusätzliche Schläuche oder dergleichen einzeln strömungsleitend verbunden werden müssen. Ferner ist es mittels der Erfindung möglich, dass mindestens einer der Mehrzahl von Anschlussstutzen wahlweise mit einem Schlauch oder einer Pumpe direkt strömungsleitend verbindbar ist. Entsprechend ist die Flexibilität des Ventils und des damit ausgestatteten Flüssigkeitssystems wesentlich erhöht. Die Formulierung "direkt strömungsleitend anschließbar" meint dabei, dass entweder der Schlauch oder die Pumpe unmittelbar an diesem Anschlussstutzen des Ventils anschließbar ist. Beispielsweise ist es also nicht erforderlich, dass die vorgenannte Pumpe mittels eines zusätzlichen Schlauchs mit dem Anschlussstutzen strömungsleitend verbunden werden muss.

Grundsätzlich ist das erfindungsgemäße Ventil nach Art, Funktionsweise, Material und Dimensionierung in weiten geeigneten Grenzen frei wählbar.

Eine vorteilhafte Weiterbildung des erfindungsgemäßen Ventils sieht vor, dass ein Querschnitt eines freien Endes dieses Anschlussstutzens quer zu der korrespondierenden Ventilgehäuseöffnung, bevorzugt senkrecht zu der Drehachse, angeordnet ist. Auf diese Weise ist der direkte strömungsleitende Anschluss des Schlauchs oder der Pumpe an diesen Anschlussstutzen zum einen konstruktiv und fertigungstechnisch weiter verbessert. Zum anderen ist dadurch eine sehr kompakte und damit platzsparende Bauweise des Ventils und des damit ausgestatteten Flüssigkeitssystems ermöglicht.

Eine besonders vorteilhafte Weiterbildung des erfindungsgemäßen Ventils sieht vor, dass dieser Anschlussstutzen derart ausgebildet ist, dass mittels dieses Anschlussstutzens eine Mehrzahl der Ventilgehäuseöffnungen, bevorzugt eine Mehrzahl von entlang der Drehachse übereinander angeordneten Ventilgehäuseöffnungen, mit dem Schlauch oder der Pumpe strömungsleitend verbindbar ist. Hierdurch ist die Kompaktheit des Ventils und des damit ausgestatteten Flüssigkeitssystems weiter verbessert. Dies gilt insbesondere für die bevorzugte Ausführungsform dieser Weiterbildung.

Eine weitere besonders vorteilhafte Weiterbildung des erfindungsgemäßen Ventils sieht vor, dass dieser Anschlussstutzen als ein integraler Bestandteil des Ventilgehäuses ausgebildet ist, bevorzugt, dass dieser Anschlussstutzen direkt an das Ventilgehäuse angespritzt ist. Auf diese Weise ist die Anzahl der Bauteile und damit die bauliche Komplexität des Ventils und des damit ausgestatteten Flüssigkeitssystems reduzierbar. Dies ist mittels der bevorzugten Ausführungsform dieser Weiterbildung auf konstruktiv und fertigungstechnisch besonders einfache Art realisierbar.

Eine andere vorteilhafte Weiterbildung des erfindungsgemäßen Ventils sieht vor, dass ein freies Ende dieses Anschlussstutzens als ein ventilseitiges Kupplungsteil einer Kupplung zur wahlweisen Kupplung des Ventils direkt mit dem Schlauch oder der Pumpe, bevorzugt als ein ventilseitiges Schnellkupplungsteil einer Schnellkupplung, ausgebildet ist. Hierdurch ist die strömungsleitende Verbindung zwischen dem erfindungsgemäßen Ventil auf der einen Seite und dem Schlauch oder der Pumpe auf der anderen Seite sehr montage- und demontagefreundlich verwirklichbar. Dies gilt insbesondere für die bevorzugte Ausführungsform dieser Weiterbildung. Kupplungen, und damit auch Schnellkupplungen, sind Standardbauteile, die in vielfältigen Ausbildungen verfügbar und für eine Vielzahl von voneinander verschiedenen Anwendungsfällen einsetzbar sind.

Entsprechend sieht eine vorteilhafte Weiterbildung des erfindungsgemäßen Flüssigkeitssystems nach Anspruch 9 vor, dass einerseits ein freies Ende dieses Anschlussstutzens als ein ventilseitiges Kupplungsteil einer Kupplung zur wahlweisen Kupplung des Ventils direkt mit dem Schlauch oder der Pumpe, bevorzugt als ein ventilseitiges Schnellkupplungsteil einer Schnellkupplung, ausgebildet ist und andererseits der Schlauch und die Pumpe jeweils ein zu dem ventilseitigen Kupplungsteil korrespondierendes Kupplungsteil, bevorzugt ein zu dem ventilseitigen Schnellkupplungsteil korrespondierendes Schnellkupplungsteil, aufweisen.

Eine weitere vorteilhafte Weiterbildung des erfindungsgemäßen Ventils sieht vor, dass dieser Anschlussstutzen an einem freien Ende im Querschnitt eine kreisrunde Strömungsdurchtrittsfläche und die zu diesem Anschlussstutzen korrespondierende Ventilgehäuseöffnung einen im Wesentlichen rechteckigen Querschnitt aufweisen, wobei die Ventilgehäuseöffnung größer als die Strömungsdurchtrittsfläche an dem freien Ende dieses Anschlussstutzens ist, und wobei sich die Strömungsdurchtrittsfläche dieses Anschlussstutzens von dessen freien Ende bis zu der korrespondierenden Ventilgehäuseöffnung diffusorartig erweitert und stufenlos in die Ventilgehäuseöffnung übergeht. Auf diese Weise ist eine strömungsoptimierte Formgebung der Anschlussstutzen und der dazu korrespondierenden Ventilgehäuseöffnungen verwirklicht. Dies deshalb, weil es die Erfindung ermöglicht, dass die Anschlussstutzen und die dazu korrespondierenden Ventilgehäuseöffnungen jeweils, im Unterschied zum Stand der Technik, auch Querschnitte mit nicht kreisrunden Innenkonturen aufweisen. Die Querschnitte mit im Wesentlichen rechteckigen Innenkonturen weisen eine lichte Weite auf, die jeweils größer als die eines Querschnitts mit kreisrunder Innenkontur ist. Erfindungsgemäß ist es somit möglich, den vorhandenen Bauraum für die Ventilgehäuseöffnungen bei dem Ventilgehäuse besonders gut auszunutzen. Der Bauraum für die Ventilgehäuseöffnungen bei dem Ventilgehäuse ist umfangsseitig, also konzentrisch um die Drehachse des Ventilkörpers herum, stark limitiert. Entsprechend können beispielsweise kreisrunde Ventilgehäuseöffnungen nur eingeschränkt vergrößert werden, um die Strömung durch die jeweilige Ventilgehäuseöffnung und den dazu korrespondierenden Anschlussstutzen zu optimieren.

Eine andere vorteilhafte Weiterbildung des erfindungsgemäßen Ventils sieht vor, dass das Ventilgehäuse als ein integraler Bestandteil eines Flüssigkeitstanks des Flüssigkeitssystems, bevorzugt eines Kühlmitteltanks des Fahrzeugs zur Bevorratung von in dem als Kühlmittelsystem ausgebildeten Flüssigkeitssystem geführten Kühlmittel, ausgebildet ist. Hierdurch ist zum einen die Anzahl der Bauteile des Flüssigkeitssystems reduziert. Entsprechend vereinfacht sich die Logistik, die Lagerhaltung und die Fertigung des Flüssigkeitssystems für ein Fahrzeug. Zum anderen ist dadurch eine sehr kompakte und damit platzsparende Bauweise des Flüssigkeitssystems ermöglicht.

Analog zu dem erfindungsgemäßen Ventil ist auch das erfindungsgemäße Flüssigkeitssystem nach Art, Funktionsweise, Material und Dimensionierung in weiten geeigneten Grenzen frei wählbar.

Eine vorteilhafte Weiterbildung des erfindungsgemäßen Flüssigkeitssystems sieht vor, dass das Ventil nach einem der Ansprüche 2 bis 7 ausgebildet ist. Auf diese Weise ist das erfindungsgemäße Flüssigkeitssystem weiter verbessert.

Anhand der beigefügten, grob schematischen Zeichnung wird die Erfindung nachfolgend näher erläutert. Dabei zeigt:
- Fig. 1: ein erstes Ausführungsbeispiel des erfindungsgemäßen Ventils eines erfindungsgemäßen Flüssigkeitssystems in einer teilweisen, perspektivischen Ansicht,
- Fig. 2: das Flüssigkeitssystem gemäß dem ersten Ausführungsbeispiel in einer teilweisen, perspektivischen Ansicht,
- Fig. 3: das Flüssigkeitssystem gemäß der Fig. 2 in einer teilweisen, geschnittenen Seitenansicht,
- Fig. 4: ein zweites Ausführungsbeispiel des erfindungsgemäßen Ventils eines erfindungsgemäßen Flüssigkeitssystems in einer teilweisen, perspektivischen Ansicht,
- Fig. 5: das Flüssigkeitssystem gemäß dem zweiten Ausführungsbeispiel in einer teilweisen, perspektivischen Ansicht und
- Fig. 6: das Flüssigkeitssystem gemäß der Fig. 5 in einer teilweisen, geschnittenen Seitenansicht.

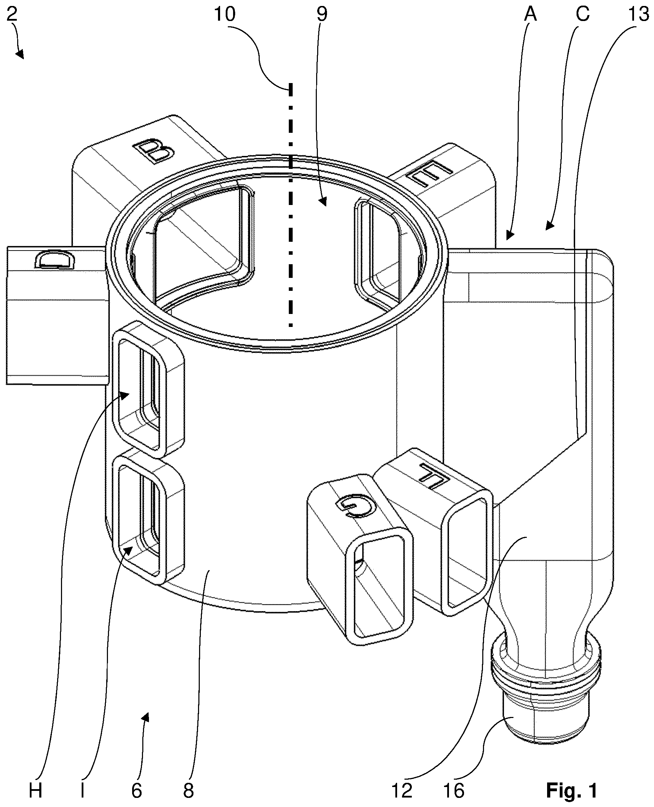

In den Fig. 1 bis 3 ist ein erstes Ausführungsbeispiel des erfindungsgemäßen Flüssigkeitssystems eines Fahrzeugs mit dem erfindungsgemäßen Ventil rein exemplarisch dargestellt.

Das Fahrzeug ist hier als ein Kraftfahrzeug, nämlich ein reines Elektrofahrzeug, ausgebildet und nicht näher dargestellt.

Das Flüssigkeitssystem 2 für das Fahrzeug ist bei dem vorliegenden Ausführungsbeispiel als ein Kühlmittelsystem zur Kühlung der Antriebsbatterie, des Antriebsmotors nebst der dazu korrespondierenden Leistungselektronik sowie zur Kühlung eines Kältemittelkreislaufs zur Klimatisierung eines Innenraums des Fahrzeugs ausgebildet. Die Antriebsbatterie, der Antriebsmotor mit der korrespondierenden Leistungselektronik und der Kältemittelkreislauf des Fahrzeugs sind hier ebenfalls nicht näher dargestellt und beispielsweise auf dem Fachmann an sich bekannte Art und Weise ausgebildet.

Das als Kühlmittelsystem ausgebildete Flüssigkeitssystem 2 umfasst einen als Kühlmitteltank ausgebildeten, nicht dargestellten Flüssigkeitstank zur Bevorratung einer als Kühlmittel ausgebildeten, nicht dargestellten Flüssigkeit des Fahrzeugs, insgesamt drei mit dem Flüssigkeitstank strömungsleitend verbundene und als Kühlmittelkreisläufe ausgebildete Flüssigkeitskreisläufe, in denen die Flüssigkeit zirkuliert, und ein zum einen mit den Flüssigkeitskreisläufen und zum anderen mit dem Flüssigkeitstank strömungsleitend verbundenes Ventil 6 zur Steuerung der als Kühlmittelströme ausgebildeten Flüssigkeitsströme der Flüssigkeit in dem Flüssigkeitssystem 2. Die Flüssigkeitskreisläufe sind ebenfalls nicht dargestellt.

Das Ventil 6 ist hier als ein sogenanntes Mehrwegeventil ausgebildet und umfasst ein Ventilgehäuse 8 mit einer Mehrzahl von Ventilgehäuseöffnungen, einen in dem Ventilgehäuse 8 um eine Drehachse 10 drehbar angeordneten Ventilkörper mit mindestens einem strömungsleitenden Verbindungskanal zur strömungsleitenden Verbindung von mindestens zwei Ventilgehäuseöffnungen der Mehrzahl von Ventilgehäuseöffnungen, eine zwischen dem Ventilgehäuse 8 und dem Ventilkörper angeordnete Ventildichtung mit zu den Ventilgehäuseöffnungen korrespondierenden Ventildichtungsöffnungen, einen Ventilantrieb zur automatischen Drehung des Ventilkörpers um die Drehachse 10 und eine zu den Ventilgehäuseöffnungen korrespondierende Mehrzahl von Anschlussstutzen zur strömungsleitenden Verbindung des Ventils 6, nämlich der Ventilgehäuseöffnungen, mit einem Rest des Flüssigkeitssystems 2.

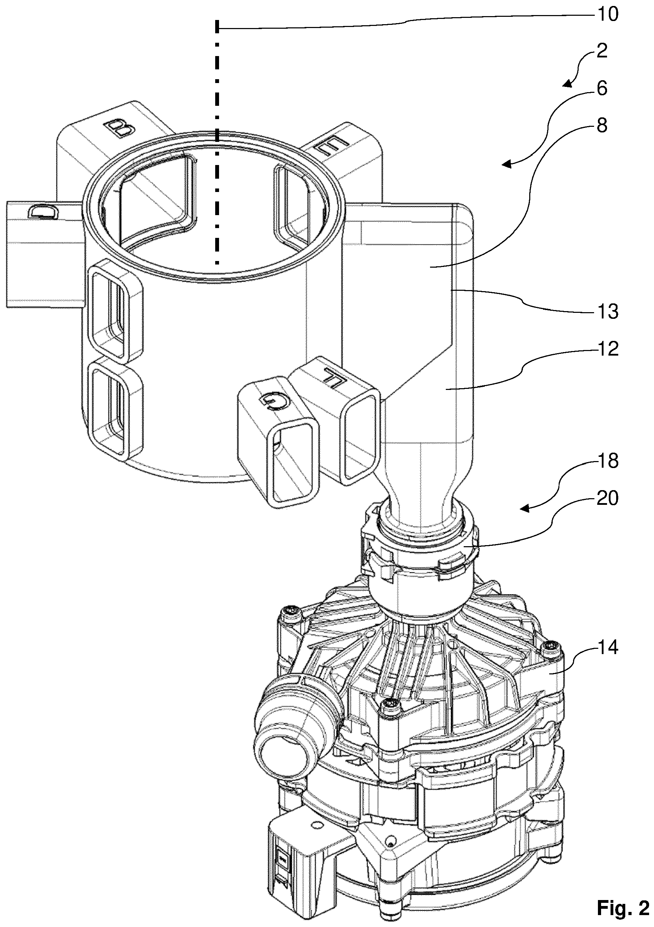

Die Ventilgehäuseöffnungen des Ventilgehäuses 8 des Ventils 6 sind in den Fig. 1 und 2 mit Bezugszeichen A, C, H und I sowie auf dem Ventilgehäuse 8 eingezeichneten Buchstaben B und D bis G gekennzeichnet. In den Fig. 1 bis 3 ist lediglich der zu den Ventilgehäuseöffnungen A und C korrespondierende Anschlussstutzen 12 der vorgenannten Anschlussstutzen zeichnerisch dargestellt. Der Ventilkörper mit dem mindestens einen Verbindungskanal, die Ventildichtung mit den zu den Ventilgehäuseöffnungen korrespondierend ausgebildeten Ventildichtungsöffnungen und der Ventilantrieb sind in den Fig. 1 bis 3 nicht dargestellt.

Das Ventilgehäuse 8 ist bei dem vorliegenden Ausführungsbeispiel als ein Kunststoffspritzgussteil ausgebildet, an das die ebenfalls als Kunststoffspritzgussteile ausgebildeten Anschlussstutzen, beispielsweise der Anschlussstutzen 12, angespritzt sind. Die Anspritznaht 13 ist in den Fig. 1 bis 3 deutlich erkennbar. Der Anschlussstutzen 12 ist somit als ein integraler Bestandteil des Ventilgehäuses 8 ausgebildet. Hierbei kann insbesondere bei der Herstellung des Ventilgehäuses 8 der Einsatz von Schiebern erfolgen. Grundsätzlich sind jedoch auch andere Verbindungstechniken denkbar. Der Fachmann wird, je nach den Erfordernissen des Einzelfalls, die geeignete Verbindungstechnik zur Verbindung auswählen. Rein exemplarisch sei hier lediglich auf Kunststoffschweißen, Klebetechniken und Verschraubungen als alternative Verbindungstechniken hingewiesen.

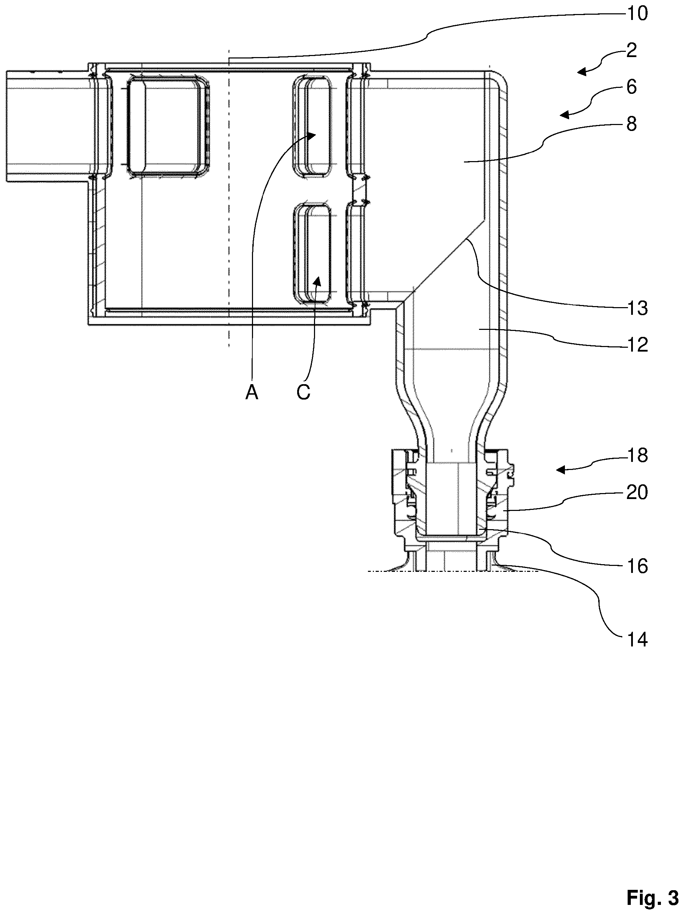

Erfindungsgemäß ist mindestens einer der Anschlussstutzen, beispielsweise der Anschlussstutzen 12, derart ausgebildet und angeordnet, dass wahlweise ein nicht dargestellter Schlauch oder eine Pumpe 14 des Flüssigkeitssystems 2 mittels dieses Anschlussstutzens 12 an dem Ventil 6 direkt strömungsleitend anschließbar ist. Siehe hierzu die Fig. 2 und 3. Hierfür ist das freie Ende dieses Anschlussstutzens 12 als ein ventilseitiges Kupplungsteil 16 einer Kupplung 18 zur wahlweisen Kupplung des Ventils 6 direkt mit dem vorgenannten Schlauch oder der Pumpe14, nämlich als ein ventilseitiges Schnellkupplungsteil einer Schnellkupplung, ausgebildet.

Entsprechend weist das Flüssigkeitssystem 2 bei dem vorliegenden Ausführungsbeispiel zusätzlich mindestens den vorgenannten Schlauch und mindestens die Pumpe 14 auf, wobei einerseits der Anschlussstutzen 12 des Ventils 6 und andererseits der Schlauch und die Pumpe 14 derart ausgebildet und angeordnet sind, dass wahlweise der Schlauch oder die Pumpe 14 an diesen Anschlussstutzen 12 direkt strömungsleitend anschließbar ist. Hierfür ist einerseits das freie Ende dieses Anschlussstutzens 12 als das ventilseitige Kupplungsteil 16 der Kupplung 18 zur wahlweisen Kupplung des Ventils 6 direkt mit dem vorgenannten Schlauch oder der Pumpe 14 ausgebildet und andererseits weisen der vorgenannte Schlauch und die Pumpe 14 jeweils ein zu dem ventilseitigen Kupplungsteil 16 korrespondierendes Kupplungsteil 20, nämlich ein zu dem ventilseitigen Schnellkupplungsteil korrespondierendes Schnellkupplungsteil, auf.

Wie aus einer Zusammenschau der Fig. 1 bis 3 ersichtlich ist, ist der Anschlussstutzen 12 hier derart ausgebildet, dass mittels dieses Anschlussstutzens 12 eine Mehrzahl von Ventilgehäuseöffnungen, nämlich die entlang der Drehachse 10 übereinander angeordneten Ventilgehäuseöffnungen A und C, mit dem vorgenannten Schlauch oder der Pumpe 14 strömungsleitend verbindbar ist. Bei dem vorliegenden Ausführungsbeispiel ist ein Querschnitt des freien Endes dieses Anschlussstutzens 12 darüber hinaus quer zu den korrespondierenden Ventilgehäuseöffnungen A und C, nämlich senkrecht zu der Drehachse 10, angeordnet.

Zwecks Strömungsoptimierung weisen die Anschlussstutzen, beispielsweise der Anschlussstutzen 12, des vorliegenden Ausführungsbeispiels an dem freien Ende des jeweiligen Anschlussstutzens im Querschnitt eine kreisrunde Strömungsdurchtrittsfläche und die zu den Anschlussstutzen korrespondierenden Ventilgehäuseöffnungen, beispielsweise die zu dem Anschlussstutzen 12 korrespondierenden Ventilgehäuseöffnungen A und C, jeweils einen im Wesentlichen rechteckigen Querschnitt auf, wobei die jeweilige Ventilgehäuseöffnung, beispielsweise die Ventilgehäuseöffnungen A und C, größer als die Strömungsdurchtrittsfläche an dem freien Ende des dazu korrespondierenden Anschlussstutzens, beispielsweise des Anschlussstutzens 12, ist, und wobei sich die Strömungsdurchtrittsflächen der Anschlussstutzen, beispielsweise des Anschlussstutzens 12, von dem freien Ende des jeweiligen Anschlussstutzens, beispielsweise des Anschlussstutzens 12, bis zu der jeweils korrespondierenden Ventilgehäuseöffnung, beispielsweise der Ventilgehäuseöffnungen A und C, diffusorartig erweitern und stufenlos in die jeweilige Ventilgehäuseöffnung, beispielsweise die Ventilgehäuseöffnungen A und C, übergehen. Die Ecken dieser im Querschnitt im Wesentlichen rechteckigen Ventilgehäuseöffnungen, beispielsweise der Ventilgehäuseöffnungen A und C, sind dabei zwecks zusätzlicher Optimierung der Strömung verrundet.

Ferner ist aus den Fig. 1 bis 3 ersichtlich, dass die im Querschnitt im Wesentlichen rechteckigen Ventilgehäuseöffnungen, beispielsweise die Ventilgehäuseöffnungen A und C, zumindest teilweise jeweils derart ausgebildet sind, dass eine senkrecht zu der Drehachse 10 verlaufende Breite dieser Ventilgehäuseöffnung kleiner als eine parallel zu der Drehachse 10 verlaufende Höhe dieser Ventilgehäuseöffnung ausgebildet ist, wobei sich die Breite entlang der konzentrisch zu der Drehachse 10 angeordneten Ventilgehäuseöffnung, beispielsweise der Ventilgehäuseöffnungen A und C, erstreckt.

Darüber hinaus ist das Ventilgehäuse 8 bei dem vorliegenden Ausführungsbeispiel derart formbar ausgebildet, dass eine der Ventildichtung zugewandte Dichtungsseite 9 des Ventilgehäuses 8 nach einem Entformen des Ventilgehäuses 8 im Wesentlichen gratfrei ausgebildet ist. Dies wird hier fertigungstechnisch beispielsweise dadurch umgesetzt, dass eine Formtrennung an der Dichtungsseite 9 des Ventilgehäuses 8 bei dem oben genannten Kunststoffspritzgussteil, nämlich dem Ventilgehäuse 8, konstruktiv vermieden wird.

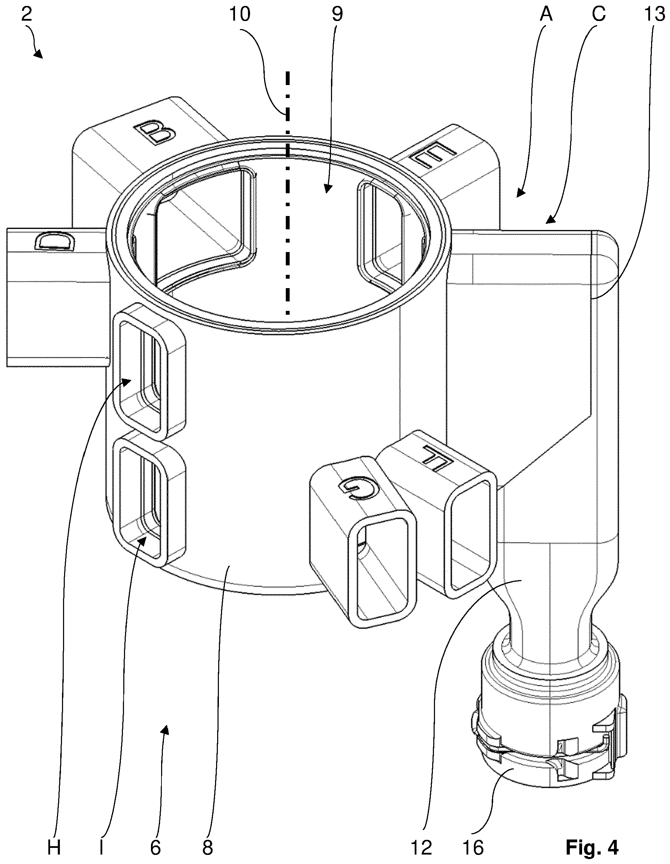

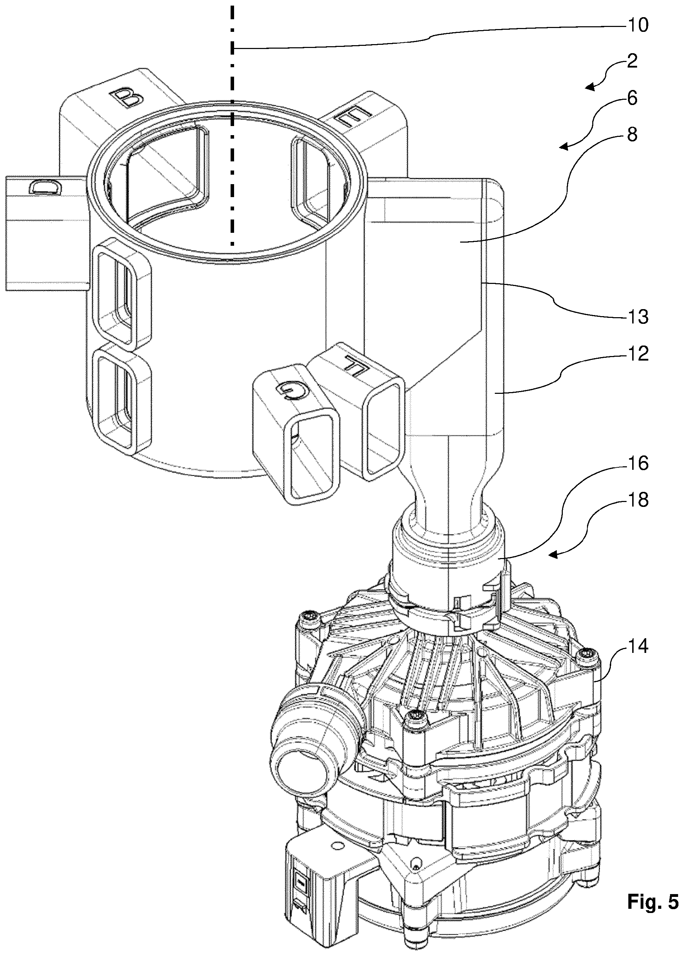

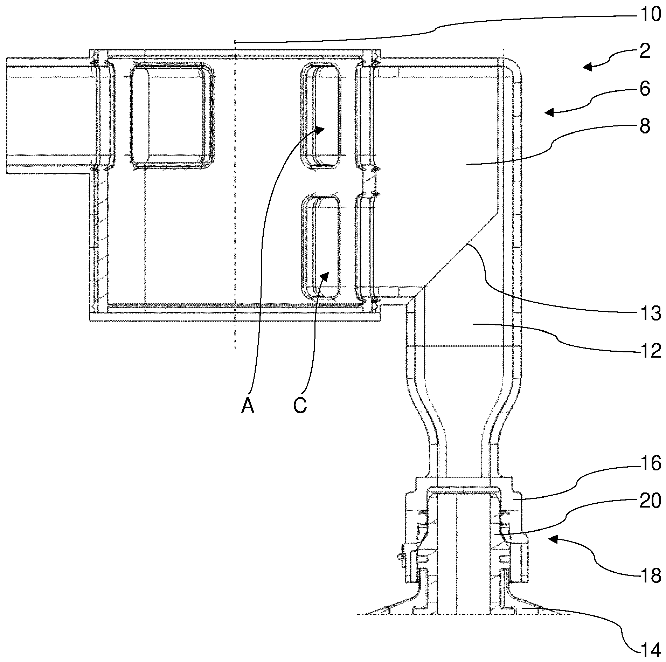

Das in den Fig. 4 bis 6 dargestellte zweite Ausführungsbeispiel des erfindungsgemäßen Flüssigkeitssystems mit dem erfindungsgemäßen Ventil ist im Wesentlichen identisch zu dem ersten Ausführungsbeispiel gemäß der Fig. 1 bis 3 ausgebildet. Gleiche oder gleichwirkende Bauteile sind in den Fig. 1 bis 6 mit den gleichen Bezugszeichen bezeichnet.

Analog zu dem ersten Ausführungsbeispiel sind einerseits der Anschlussstutzen 12 des Ventils 6 und andererseits der Schlauch und die Pumpe 14 derart ausgebildet und angeordnet, dass wahlweise der Schlauch oder die Pumpe 14 an diesen Anschlussstutzen 12 direkt strömungsleitend anschließbar ist. Hierfür ist bei dem vorliegenden zweiten Ausführungsbeispiel wiederum einerseits das freie Ende dieses Anschlussstutzens 12 als das ventilseitige Kupplungsteil 16 der Kupplung 18 zur wahlweisen Kupplung des Ventils 6 direkt mit dem vorgenannten Schlauch oder der Pumpe 14 ausgebildet und andererseits weisen der vorgenannte Schlauch und die Pumpe 14 jeweils ein zu dem ventilseitigen Kupplungsteil 16 korrespondierendes Kupplungsteil 20, nämlich ein zu dem ventilseitigen Schnellkupplungsteil korrespondierendes Schnellkupplungsteil, auf. Im Unterschied zu dem ersten Ausführungsbeispiel sind das ventilseitige Kupplungsteil 16 bei dem zweiten Ausführungsbeispiel analog zu dem Kupplungsteil 20 des ersten Ausführungsbeispiels und das Kupplungsteil 20 des zweiten Ausführungsbeispiels analog zu dem ventilseitigen Kupplungsteil 16 des ersten Ausführungsbeispiels ausgebildet. Siehe hierzu die Fig. 1 bis 6 in einer Zusammenschau. Ansonsten stimmen die beiden Ausführungsbeispiele überein, so dass hier auf die obigen Ausführungen zu dem ersten Ausführungsbeispiel verwiesen werden kann.

Aufgrund der erfindungsgemäßen Ausbildung des Ventils für ein Flüssigkeitssystem eines Fahrzeugs und des Flüssigkeitssystems eines Fahrzeugs sind das Ventil 6 und das Flüssigkeitssystem 2 zum einen auf konstruktiv und fertigungstechnisch besonders einfache Art und Weise realisierbar. Die Erfindung ermöglicht es, dass auch komplexere Flüssigkeitssysteme 2 mit beispielsweise komplexeren Ventilen, wie dem Mehrwegeventil 6, und mit an diesen Ventilen strömungsleitend angeschlossenen weiteren Komponenten dieser Flüssigkeitssysteme, beispielsweise der Pumpe 14, im Vergleich zum Stand der Technik relativ einfach verwirklichbar sind. Beispielsweise ist mittels der Erfindung eine weitgehende Zentralisierung der Baugruppen von Flüssigkeitssystemen, wie beispielsweise des genannten Flüssigkeitstanks, der Pumpe 14 und des Ventils 6, ermöglicht. Hierdurch können zum Beispiel Gehäuseteile für eine Mehrzahl von Baugruppen eines Flüssigkeitssystems 2, beispielsweise den vorgenannten Baugruppen, gleichzeitig verwendet werden. Es ist erfindungsgemäß nicht mehr erforderlich, dass die einzelnen Baugruppen eines Flüssigkeitssystems, wie beim Stand der Technik üblich, miteinander durch zusätzliche Schläuche oder dergleichen einzeln strömungsleitend verbunden werden müssen. Ferner ist es mittels der Erfindung möglich, dass mindestens einer der Mehrzahl von Anschlussstutzen, beispielsweise der Anschlussstutzen 12, wahlweise mit dem Schlauch oder der Pumpe 14 direkt strömungsleitend verbindbar ist. Entsprechend ist die Flexibilität des Ventils 6 und des damit ausgestatteten Flüssigkeitssystems 2 wesentlich erhöht.

Die Erfindung ist nicht auf die vorliegenden Ausführungsbeispiele begrenzt. Beispielsweise ist die Erfindung auch bei anderen Arten von Fahrzeugen vorteilhaft einsetzbar. Dies gilt nicht lediglich für Landfahrzeuge, sondern auch für Luft- und Seefahrzeuge. Siehe hierzu auch die Beschreibungseinleitung.

Insbesondere ist die Erfindung nicht auf die konstruktiven und fertigungstechnischen Details der Ausführungsbeispiele beschränkt. Beispielsweise ist die Anzahl der Anschlussstutzen und der dazu korrespondierenden Ventilgehäuseöffnungen und Ventildichtungsöffnungen nicht auf die jeweilige Anzahl der Ausführungsbeispiele begrenzt, sondern je nach den Erfordernissen des Einzelfalls in den technischen Grenzen frei wählbar. Gleiches gilt für die räumliche Anordnung der einzelnen Anschlussstutzen, die ebenfalls in Abhängigkeit der räumlichen Gegebenheiten des jeweiligen Anwendungsfalls frei wählbar ist. Darüber hinaus ist es denkbar, dass das Ventilgehäuse als ein integraler Bestandteil eines Flüssigkeitstanks des Flüssigkeitssystems, bevorzugt eines Kühlmitteltanks des Fahrzeugs zur Bevorratung von in dem als Kühlmittelsystem ausgebildeten Flüssigkeitssystem geführten Kühlmittel, ausgebildet ist.

Selbstverständlich lässt sich die Erfindung nicht nur bei als Kühlmittelsystemen ausgebildeten Flüssigkeitssystemen eines Fahrzeugs vorteilhaft einsetzen. Entsprechend ist die Erfindung für eine Vielzahl von voneinander verschiedenen Anwendungsfällen verwendbar.

### Bezugszeichenliste

- 2: Flüssigkeitssystem
- 6: Ventil
- 8: Ventilgehäuse
- 9: Dichtungsseite des Ventilgehäuses 8
- 10: Drehachse des Ventilkörpers des Ventils 6
- 12: Anschlussstutzen
- 14: Pumpe
- 16: Ventilseitiges Kupplungsteil
- 18: Kupplung
- 20: Kupplungsteil der Pumpe 14
- A bis I: Ventilgehäuseöffnungen des Ventilgehäuses 8

## Patentansprüche

1. Ventil (6) für ein Flüssigkeitssystem (2) eines Fahrzeugs, umfassend ein Ventilgehäuse (8) mit einer Mehrzahl von Ventilgehäuseöffnungen (A, B, C, D, E, F, G, H, I), einen in dem Ventilgehäuse (8) um eine Drehachse (10) drehbar angeordneten Ventilkörper mit mindestens einem strömungsleitenden Verbindungskanal zur strömungsleitenden Verbindung von mindestens zwei Ventilgehäuseöffnungen der Mehrzahl von Ventilgehäuseöffnungen (A, B, C, D, E, F, G, H, I), eine zwischen dem Ventilgehäuse (8) und dem Ventilkörper angeordnete Ventildichtung mit zu den Ventilgehäuseöffnungen (A, B, C, D, E, F, G, H, I) korrespondierenden Ventildichtungsöffnungen, einen Ventilantrieb zur automatischen Drehung des Ventilkörpers um die Drehachse (10) und eine zu den Ventilgehäuseöffnungen (A, B, C, D, E, F, G, H, I) korrespondierende Mehrzahl von Anschlussstutzen (12) zur strömungsleitenden Verbindung des Ventils (6) mit einem Rest des Flüssigkeitssystems (2),
**dadurch gekennzeichnet,**
**dass** mindestens einer der Anschlussstutzen (12) derart ausgebildet und angeordnet ist, dass wahlweise ein Schlauch oder eine Pumpe (14) des Flüssigkeitssystems (2) mittels dieses Anschlussstutzens (12) an dem Ventil (6) direkt strömungsleitend anschließbar ist.

2. Ventil (6) nach Anspruch 1,
**dadurch gekennzeichnet,**
**dass** ein Querschnitt eines freien Endes dieses Anschlussstutzens (12) quer zu der korrespondierenden Ventilgehäuseöffnung (A, C), bevorzugt senkrecht zu der Drehachse (10), angeordnet ist.

3. Ventil (6) nach Anspruch 1 oder 2,
**dadurch gekennzeichnet,**
**dass** dieser Anschlussstutzen (12) derart ausgebildet ist, dass mittels dieses Anschlussstutzens (12) eine Mehrzahl der Ventilgehäuseöffnungen (A, C), bevorzugt eine Mehrzahl von entlang der Drehachse (10) übereinander angeordneten Ventilgehäuseöffnungen (A, C), mit dem Schlauch oder der Pumpe (14) strömungsleitend verbindbar ist.

4. Ventil (6) nach einem der Ansprüche 1 bis 3,
**dadurch gekennzeichnet,**
**dass** dieser Anschlussstutzen (12) als ein integraler Bestandteil des Ventilgehäuses (8) ausgebildet ist, bevorzugt, dass dieser Anschlussstutzen (12) direkt an das Ventilgehäuse (8) angespritzt ist.

5. Ventil (6) nach einem der Ansprüche 1 bis 4,
**dadurch gekennzeichnet,**
**dass** ein freies Ende dieses Anschlussstutzens (12) als ein ventilseitiges Kupplungsteil (16) einer Kupplung (18) zur wahlweisen Kupplung des Ventils (6) direkt mit dem Schlauch oder der Pumpe (14), bevorzugt als ein ventilseitiges Schnellkupplungsteil einer Schnellkupplung, ausgebildet ist.

6. Ventil (6) nach einem der Ansprüche 1 bis 5,
**dadurch gekennzeichnet,**
**dass** dieser Anschlussstutzen (12) an einem freien Ende im Querschnitt eine kreisrunde Strömungsdurchtrittsfläche und die zu diesem Anschlussstutzen (12) korrespondierende Ventilgehäuseöffnung (A, B, C, D, E, F, G, H, I) einen im Wesentlichen rechteckigen Querschnitt aufweisen, wobei die Ventilgehäuseöffnung (A, B, C, D, E, F, G, H, I) größer als die Strömungsdurchtrittsfläche an dem freien Ende dieses Anschlussstutzens (12) ist, und wobei sich die Strömungsdurchtrittsfläche dieses Anschlussstutzens (12) von dessen freien Ende bis zu der korrespondierenden Ventilgehäuseöffnung (A, B, C, D, E, F, G, H, I) diffusorartig erweitert und stufenlos in die Ventilgehäuseöffnung (A, B, C, D, E, F, G, H, I) übergeht.

7. Ventil nach einem der Ansprüche 1 bis 6,
**dadurch gekennzeichnet,**
**dass** das Ventilgehäuse als ein integraler Bestandteil eines Flüssigkeitstanks des Flüssigkeitssystems, bevorzugt eines Kühlmitteltanks des Fahrzeugs zur Bevorratung von in dem als Kühlmittelsystem ausgebildeten Flüssigkeitssystem geführten Kühlmittel, ausgebildet ist.

8. Flüssigkeitssystem (2) eines Fahrzeugs, umfassend einen Flüssigkeitstank zur Bevorratung einer Flüssigkeit des Flüssigkeitssystems (2), mindestens einen mit dem Flüssigkeitstank strömungsleitend verbundenen Flüssigkeitskreislauf, in dem die Flüssigkeit zirkuliert, und ein mit dem Flüssigkeitskreislauf und/oder dem Flüssigkeitstank strömungsleitend verbundenes Ventil (6) mit einer Mehrzahl von Anschlussstutzen (12) zur strömungsleitenden Verbindung des Ventils (6) mit einem Rest des Flüssigkeitssystems (2) zur Steuerung mindestens eines Flüssigkeitsstromes der Flüssigkeit in dem Flüssigkeitssystem (2),
**dadurch gekennzeichnet,**
**dass** das Flüssigkeitssystem (2) mindestens einen Schlauch und mindestens eine Pumpe (14) aufweist, wobei einerseits mindestens einer der Anschlussstutzen (12) des Ventils (6) und andererseits der Schlauch und die Pumpe (14) derart ausgebildet und angeordnet sind, dass wahlweise der Schlauch oder die Pumpe (14) an diesen Anschlussstutzen (12) direkt strömungsleitend anschließbar ist.

9. Flüssigkeitssystem (2) nach Anspruch 8,
**dadurch gekennzeichnet, dass** das Ventil (6) nach einem der Ansprüche 2 bis 7 ausgebildet ist.

10. Flüssigkeitssystem (2) nach Anspruch 9,
**dadurch gekennzeichnet,**
**dass** einerseits ein freies Ende dieses Anschlussstutzens (12) als ein ventilseitiges Kupplungsteil (16) einer Kupplung (18) zur wahlweisen Kupplung des Ventils (6) direkt mit dem Schlauch oder der Pumpe (14), bevorzugt als ein ventilseitiges Schnellkupplungsteil einer Schnellkupplung, ausgebildet ist und andererseits der Schlauch und die Pumpe (14) jeweils ein zu dem ventilseitigen Kupplungsteil (16) korrespondierendes Kupplungsteil (20), bevorzugt ein zu dem ventilseitigen Schnellkupplungsteil korrespondierendes Schnellkupplungsteil, aufweisen.
